# EUROPEAN PATENT SPECIFICATION

(11) **EP 4 000 850 B1**
(45) Date of publication and mention of the grant of the patent: **11.09.2024**
(21) Application number: 20841018.3
(22) Date of filing: 14.07.2020
(51) Int. Cl.: B29C 33/02, B29C 33/64, B29D 30/06

(54) **TIRE VULCANIZATION BLADDER**
REIFENVULKANISATIONSBALG
VESSIE DE VULCANISATION DE PNEU

(30) Priority: 18.07.2019 JP 2019133119
(43) Date of publication of application: 25.05.2022
(73) Proprietor: The Yokohama Rubber Co., Ltd., Hiratsuka-shi, Kanagawa 254-8601 (JP)
(72) Inventor: OZAKI, Ayako, Hiratsuka-shi, Kanagawa 254-8601 (JP); ISHIKAWA, Kazunori, Hiratsuka-shi, Kanagawa 254-8601 (JP)
(74) Representative: Dilg, Haeusler, Schindelmann Patentanwaltsgesellschaft mbH
(86) International application number: PCT/JP2020/027359
(87) International publication number: WO 2021/010391

(56) References cited:
- EP-A1- 3 260 262
- JP-A- 2000 158 454
- JP-A- 2011 224 945
- JP-A- 2017 001 293
- JP-A- H03 202 326
- JP-A- H10 212 411
- US-B1- 6 576 734

## Description

### Technical Field

The present invention relates to a tire vulcanization bladder having a coating layer formed from a release agent, and particularly relates to a tire vulcanization bladder that made it possible to improve productivity by suppressing peeling off of the coating layer.

### Background Art

In vulcanization of a tire, after a tire vulcanization bladder in a shrunk state is inserted into an inner side of an unvulcanized tire arranged in a tire vulcanization mold, a heating medium and a pressurizing medium are injected into the inner portion of the bladder in a state where the tire vulcanization mold is closed to expand the bladder, the unvulcanized tire is pressurized and heated, and thus the unvulcanized tire is vulcanized. After vulcanization is performed for a predetermined time, the tire vulcanization mold is opened, the bladder is shrunk to release the bladder from the tire inner surface, and the vulcanized tire is taken out from the bladder. At this time, to prevent the adhesion of the tire inner surface and the bladder surface, a release agent is applied in advance in the tire inner surface. However, because such a release agent remains on the tire inner surface after the vulcanization, in addition to the appearance being affected, especially when, for example, a sound absorptive member or a sensor is adhered on the tire inner surface, the adhesiveness thereof may be inhibited.

Therefore, in recent years, it is proposed to impart releasability to the bladder itself by providing a coating layer on a bladder surface in advance instead of applying a release agent on an inner surface of an unvulcanized tire (e.g., WO 2018/146884 describes a pneumatic tire produced by a bladder having such a coating layer). However, ensuring adequate adhesion between a bladder body typically containing a butyl rubber as a main component and a coating layer typically containing a silicone as a main component tends to be difficult. Because of this, after vulcanization is repeatedly performed, problems occur in that the coating layer is peeled off and the bladder becomes unusable in a short period of time and requires exchange, and thus productivity is reduced.

Document EP 3260262 A1 discloses a release agent for application to a tire bladder that comprises a carboxyl group-containing organohydrogenpolysiloxane.

### Summary of Invention

### Technical Problem

An object of the present invention is to provide a tire vulcanization bladder that includes a coating layer formed from a release agent and that has made it possible to improve productivity by suppressing peeling off of the coating layer.

### Solution to Problem

The tire vulcanization bladder according to independent claim 1 of the present invention to achieve the object described above is a tire vulcanization bladder comprising: a primer layer on an outer surface of a bladder body; and a coating layer on an outer side of the primer layer, the bladder body being formed from a rubber composition containing 50 mass% or more of a butyl rubber in a rubber component, the coating layer being formed from a release agent containing a silicone component, and the primer layer being formed from a silane compound having an alkoxy group and an amino group.

Furthermore, the method of producing a tire vulcanization bladder according to independent claim 4 of the present invention to achieve the object described above is a method of producing a tire vulcanization bladder, the tire vulcanization bladder being formed from an expandable rubber, being arranged in an inner side of an unvulcanized tire inserted in a tire vulcanization mold, and pressing toward an inner wall of the tire vulcanization mold from the inner side of the unvulcanized tire, the tire vulcanization bladder comprising a membrane part in a cylindrical form in contact with an inner surface of the unvulcanized tire during vulcanization, the membrane part being a multilayer structure of a bladder body, a primer layer, and a coating layer, the method comprising: vulcanization-molding a bladder body formed from a rubber composition containing 50 mass% or more of a butyl rubber in a rubber component; arranging a primer layer formed from a silane compound having an alkoxy group and an amino group on an outer surface of the bladder body that is obtained; and arranging and curing a coating layer formed from a release agent containing a silicone component on an outer side of this primer layer.

### Advantageous Effects of Invention

In the tire vulcanization bladder according to the present invention, because the primer layer formed from the silane compound having an alkoxy group and an amino group is interposed between the coating layer and the bladder body as described above, the alkoxy group reacts with the silicone component contained in the coating layer and exhibits excellent adhesiveness, and the amino group reacts with the butyl rubber constituting the bladder body and exhibits excellent adhesiveness, and thus separation of the coating layer from the bladder body can be effectively prevented.

In an embodiment of the present invention, the silane compound is preferably a polysiloxane represented by General Formula (1) below. The polysiloxane described below is advantageous for preventing separation of the coating layer because the polysiloxane has excellent reactivity to the coating layer containing the silicone component and the bladder body formed from the butyl rubber.

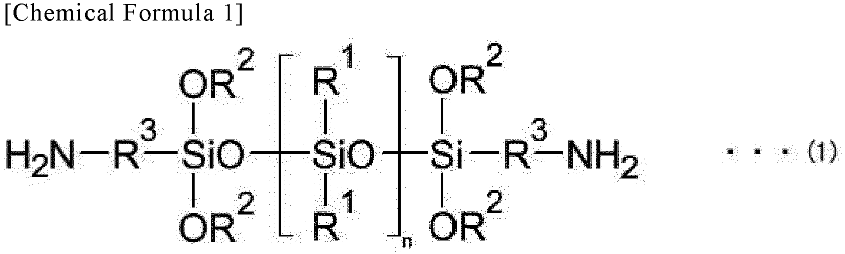

In the formula, n represents an integer from 0 to 1000, R¹ represents an alkyl group having from 1 to 20 carbons or an aryl group, OR² represents an alkoxy group having from 1 to 20 carbons, and R³ represents an alkylene group having from 1 to 20 carbons.

In an embodiment of the present invention, the silicone component is preferably a crosslinkable organopolysiloxane. Accordingly, reactivity between the primer layer (alkoxy group in the silane compound) and the coating layer is increased, and thus it is advantageous to prevent separation of the coating layer.

### Brief Description of Drawings

FIG. 1 is a cross-sectional view illustrating a tire vulcanization device in which a tire vulcanization bladder according to an embodiment of the present invention is used.
FIG. 2 is a cross-sectional view schematically illustrating a structure of a membrane part of a tire vulcanization bladder according to an embodiment of the present invention.

### Description of Embodiments

Configurations of embodiments of the present invention will be described in detail below with reference to the accompanying drawings.

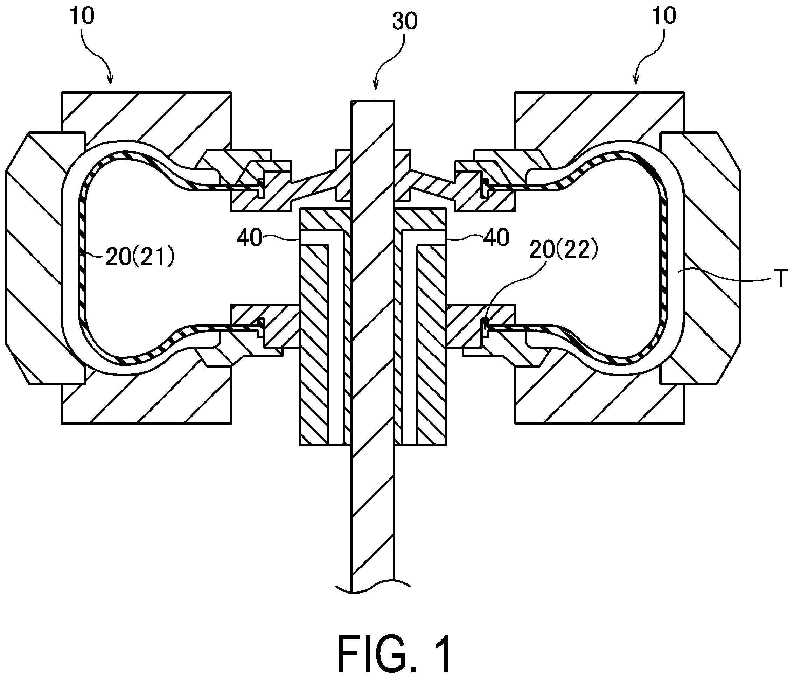

The tire vulcanization device illustrated in FIG. 1 includes: a tire vulcanization mold 10 (hereinafter, referred to as mold 10) forming an outer surface of a pneumatic tire T; a tire vulcanization bladder 20 (hereinafter, also referred to as bladder 20) in a cylindrical form inserted in an inner side of the pneumatic tire T; a center mechanism 30 that operates the bladder 20; and a medium supply means 40 to supply a heating medium and a pressurizing medium into the inner side of the bladder 10. Note that, although it is omitted in FIG. 1, the tire vulcanization device also has a heating means to heat the mold 10 from the outside.

An embodiment of the present invention is related to the bladder 20 that is used in such an ordinary vulcanization device, the structure of the vulcanization device is not particularly limited. That is, for the constituent other than the bladder 20 (e.g., mold 10, center mechanism 30, medium supply means 40, and heating means that is not illustrated), ordinary structures can be employed.

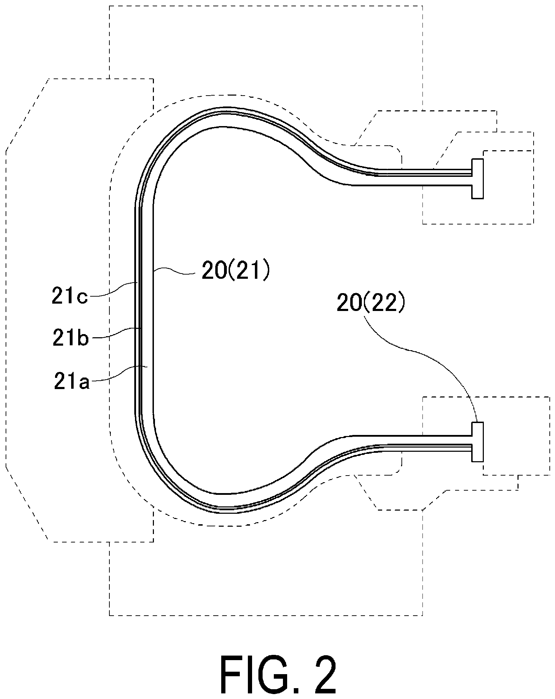

The bladder 20 is formed from a membrane part 21 in a cylindrical form in contact with the inner surface of the tire T, and a pair of clamp parts 22 that are formed on both edges of the membrane part 21 and that are held by the mold 10 and/or the center mechanism 30. Furthermore, the bladder 20 is formed from a multilayer structure formed from a bladder body 21a, a primer layer 21b, and a coating layer 21c as illustrated in FIG. 2. Note that the bladder 20 illustrated in FIGS. 1 and 2 is in a state where the bladder 20 is expanded toward the outer side in the radial direction of the tire T.

The bladder body 21a is arranged in the innermost layer of the bladder 20 and is formed from an expandable rubber. The rubber composition constituting the bladder body 21a contains 50 mass% or more, and preferably from 51 mass% to 99 mass%, of a butyl rubber in a rubber component. By using the butyl rubber as the main component as described above, flexibility as the bladder 20 and permeation prevention performance for the heating medium and the pressurizing medium that are filled in the bladder 20 can be ensured. As the rubber composition constituting the bladder body 21a, a rubber component besides the butyl rubber can be also blended.

The coating layer 21c is arranged on the outermost surface of the membrane part 21 and is brought into contact with the inner surface of the pneumatic tire T during vulcanization. The coating layer 21c is formed from a release agent containing a silicone component as an active ingredient. By including the coating layer 21c formed from the release agent as described above, it can prevent adhesion of the tire to the surface of the bladder 20 (bladder body 21) during vulcanization. Examples of the silicone component contained in the release agent include organopolysiloxanes, and the examples thereof include dialkylpolysiloxane, alkylphenylpolysiloxane, alkylaralkylpolysiloxane, and 3,3,3-trifluoropropylmethylpolysiloxane. The dialkylpolysiloxane is, for example, dimethylpolysiloxane, diethylpolysiloxane, methylisopropylpolysiloxane, and methyldodecylpolysiloxane. The alkylphenylpolysiloxane is, for example, methylphenylpolysiloxane, a dimethylsiloxane methylphenylsiloxane copolymer, and dimethylsiloxane-diphenylsiloxane copolymer. The alkyl aralkyl polysiloxane is, for example, methyl(phenylethyl)polysiloxane and methyl(phenylpropyl)polysiloxane. One kind or two or more kinds of these organopolysiloxanes may be used in combination.

The primer layer 21b is provided in between the bladder body 21a and the coating layer 21c. The primer layer 21b is formed from a silane compound having an alkoxy group and an amino group. In general, adhesiveness between the bladder body 21a (butyl rubber) and the coating layer 21c (silicone) is not necessarily good; nevertheless, in an embodiment of the present invention, since the primer layer 21b formed from the silane compound having both the amino group exhibiting excellent adhesiveness by reacting with the bladder body 21a (butyl rubber) and the alkoxysilyl group exhibiting excellent adhesiveness by reacting with the coating layer 21c (silicone) is interposed, the coating layer 21c can be reliably adhered to the surface of the bladder body 21a, and separation of the coating layer 21c from the bladder body 21a can be suppressed.

As the silane compound having an alkoxy group and an amino group, for example, silane coupling agents having an amino group and hydrolysis-condensation products thereof, and condensation products of a silanol-terminal polyorganosiloxane and a silane coupling agent having an amino group can be used. In particular, the polysiloxane represented by General Formula (1) below can be suitably used. The polysiloxane described below is advantageous for preventing separation of the coating layer because the polysiloxane has excellent reactivity to the coating layer containing the silicone component and the bladder body formed from the butyl rubber.

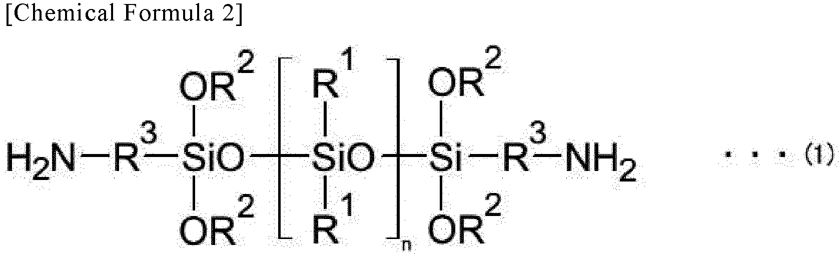

In General Formula (1) above, n is an integer from 0 to 1000, and preferably 10. R¹ is an alkyl group having from 1 to 20 carbons or an aryl group, and preferably a methyl group (number of carbons: 1). OR² is an alkoxy group having from 1 to 20 carbons, and preferably an ethoxy group (number of carbons: 2). R³ is an alkylene group having from 1 to 20 carbons, and preferably an n-propylene group (number of carbons: 3).

Because the bladder 20 is stretched and deformed repeatedly in vulcanization, by setting thicknesses of the primer layer 21b and the coating layer 21c to appropriate ranges, it is preferred to make these layers easier to follow the deformation of the bladder body 21. Specifically, the total thickness of the primer layer 21b and the coating layer 21c is preferably from 1 µm to 200 µm. Note that the thickness of each layer is a thickness measured at a position corresponding to the equator of the tire in a state where the bladder 20 is not inflated.

The tire vulcanization bladder according to an embodiment of the present invention is produced by forming the primer layer 21b described above by applying a primer formed from a silane compound having an alkoxy group and an amino group on an outer surface of the bladder body 21a described above, and further forming the coating layer 21c described above by applying a release agent containing a silicone on an outer surface of the primer layer 21b. Accordingly, as long as the bladder body 21a has a butyl rubber as a main component and 50 mass% or more of the butyl rubber is contained in the rubber component, the tire vulcanization bladder according to an embodiment of the present invention can be produced by applying the primer and the release agent described above on an outer surface of a known typical bladder. In a known typical bladder, recess/protrusion may be provided on the outer surface of the bladder to ensure releasability; however, an embodiment of the present invention exhibits more effect in a case where the bladder surface is smooth and adhesion tends to occur, compared to a bladder provided with recess/protrusion to enhance releasability.

The primer is a solution obtained by diluting the composition containing the silane compound having an alkoxy group and an amino group to a concentration of 0.1 mass% to 10 mass%, and applied to the surface of the bladder body 21a by coating by a brush or spray. After the application of the primer and before application of a release agent, the bladder body 21a and the primer are preferably allowed to react, and the primer layer 21b is preferably cured on the surface of the bladder body 21a. The temperature during the curing is preferably roughly at room temperature (e.g., 5°C to 40°C), and the duration is preferably from 10 minutes to 15 minutes.

The release agent is a composition containing a silicone component as an active ingredient, and is used by, for example, diluting to a concentration of 2 mass% to 10 mass%. The release agent is applied onto the primer layer 21b also by application by a brush or spray. After the application of the release agent, the primer layer 21b and the release agent are preferably allowed to react, and the coating layer 21c is preferably cured on the surface of the primer layer 21b. The temperature during the curing is, for example, preferably from 25°C to 200°C, and the duration is preferably from 5 minutes to 180 minutes. The application of the coating layer 21c is preferably performed by baking coating. Formation of the coating layer 21c can be performed once or more and three times or less.

### Examples

To produce tires using molds for bladder production having a basic structure illustrated in FIG. 1, pneumatic tires were produced by using tire vulcanization bladders (Conventional Example 1, Examples 1 and 2, and Comparative Examples 1 to 4), in which the main component of the rubber composition constituting the bladder, presence of the primer layer, the type of the silane compound contained in the primer layer, the layer thickness of the primer layer, presence of the coating layer, and the layer thickness of the coating layer are varied as listed in Table 1. Note that the tire size of the pneumatic tire produced in each example was 275/40R21.

In each example, the concentration of the primer applied as the primer layer was 5 mass%, and the primer was applied on the surface of the bladder body by using a brush. Furthermore, the curing condition after the primer application was at room temperature (25°C) and for 15 minutes. The coating agent was sprayed by a spray, and the curing condition was at 150°C and for 80 minutes.

"Main component of rubber composition constituting bladder" in Table 1 means the rubber blended in an amount of 50 mass% or more in a rubber component. In the table, "IIR" means butyl rubber, and "NR" means natural rubber.

The silane compound listed in Table 1 (compounds 1 to 5) are as described below.

- Compound 1: Polysiloxane represented by Formula (2) below synthesized by the method described below.

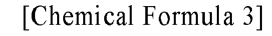

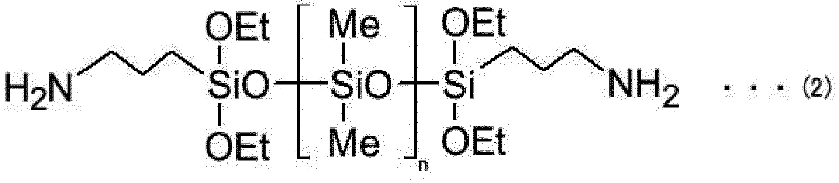

In the formula, n is 10, Me is a methyl group, and Et is an ethyl group.
- Compound 2: Alkylsilane represented by Formula (3) below synthesized by the method described below.

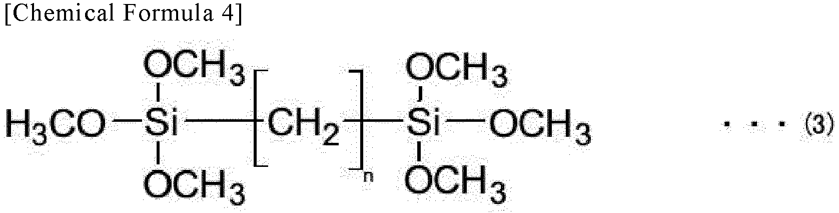

In the formula, n is 9.
- Compound 3: Polysiloxane represented by Formula (4) below synthesized by the method described below.

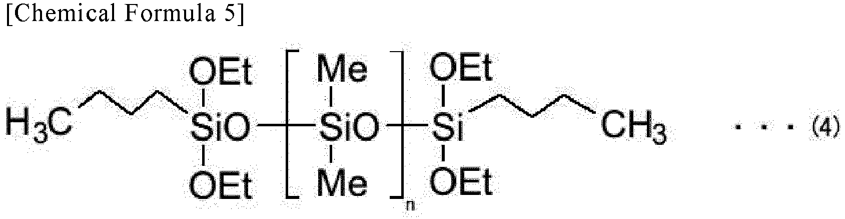

In the formula, Me is a methyl group, and Et is an ethyl group.
- Compound 4: Amino group-containing organopolysiloxane represented by Formula (5) below, KF-8010, available from Shin-Etsu Chemical Co., Ltd. (amine functional group equivalent: 430 g/mol)

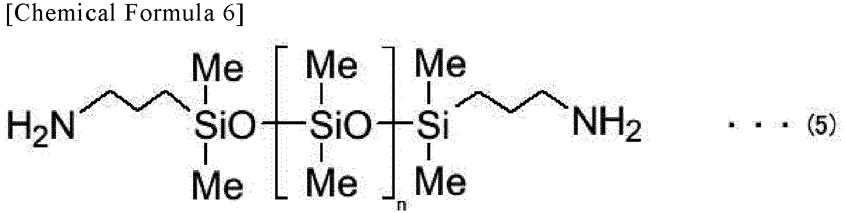

In the formula, Me is a methyl group.
- Compound 5: Polysiloxane having an amino group and an ethoxysilyl group and synthesized by the method described below.

### Synthesizing Method of Compound 1

In 22.1 g of aminopropyltriethoxysilane, an ethanol solution with 1.8 g water was gradually added dropwise and reacted at room temperature for 12 hours. Then, the ethanol was distilled off, and 18.4 g of aminosilane condensation product (compound 1) was obtained.

### Synthesizing Method of Compound 2

In 55.1 g of 1,7-octadiene, in the presence of a platinum catalyst, 84 g of triethoxysilane was added dropwise over 30 minutes at 80°C. After completion of the dropwise addition, reaction was allowed at the same temperature for 1 hour. After completion of the reaction, an excessive amount of the triethoxysilane was removed, and 135 g of the target compound (compound 2) was obtained.

### Synthesizing Method of Compound 3

In 100 g of dimethylpolysiloxane having silanol at both terminals (DMS-S12, available from Gelest), 60 g of butyltriethoxysilane and 2 g of acetic acid were added and allowed to react at 80°C for 6 hours. Thereafter, an excessive amount of the butyltriethoxysilane and ethanol were distilled off, and 140 g of the target polysiloxane (compound 3) was obtained.

### Synthesizing Method of Compound 5

In 1 mol of 3-aminopropyltriethoxysilane, 0.5 mol of water was added dropwise and subjected to hydrolysis-condensation at room temperature for 2 hours. Then, generated ethanol was distilled off, and a polysiloxane having an amino group and an ethoxysilyl group (compound 5) was obtained.

As the coating layer, a common coating layer was used for Conventional Example 1, Examples 1 and 2, and Comparative Examples 1 to 4.

For each example, releasability and peeling resistance were evaluated by the method described below.

### Releasability

In vulcanization using the tire vulcanization bladder of each example, releasability at the time when a tire is removed from the bladder was evaluated. For evaluation results, "Good" was given for the case where the tire and the bladder did not adhere and released. and "Poor" was given for the case where the tire and the bladder were adhered and did not release.

### Peeling Resistance

Vulcanization was repeatedly performed by using the tire vulcanization bladder of each example, and the number of vulcanization performed until the peeling off of the coating layer occurred was measured.

Evaluation results are expressed as index values with Conventional Example 1 being assigned the index value of 100.

Larger index values indicate a higher number of vulcanization and superior peeling resistance.

**[Table 1]**

| | Conventional Example 1 | Example 1 | Comparative Example 1 | Comparative Example 2 | Comparative Example 3 | Example 2 | Comparative Example 4 |
|---|---|---|---|---|---|---|---|
| Main component of rubber composition constituting bladder | IIR | IIR | IIR | IIR | IIR | IIR | NR |
| Presence of primer layer | No | Yes | Yes | Yes | Yes | Yes | Yes |
| Type of silane compound contained in primer layer | - | Compound 1 | Compound 2 | Compound 3 | Compound 4 | Compound 5 | Compound 1 |
| Presence of coating layer | Yes | Yes | Yes | Yes | Yes | Yes | Yes |
| Layer thickness of coating layer and µm primer layer (total) | 30 | 30 | 30 | 30 | 30 | 30 | 30 |
| Releasability | Good | Good | Good | Good | Good | Good | Good |
| Peeling resistance | 100 | 200 | 83 | 85 | 86 | 190 | 50 |

As can be seen from Table 1, the tire vulcanization bladders of Examples 1 and 2 improved peeling resistance compared to that of Conventional Example 1 while excellent releasability was ensured. On the other hand, the tire vulcanization bladders of Comparative Examples 1 to 3 could not achieve the effect of improving the peeling resistance because the silane compound contained in the primer layer did not have an alkoxysilyl group and/or an amino group. The tire vulcanization bladder of Comparative Example 4 could not achieve the effect of improving the peeling resistance because the main component of the rubber composition constituting the bladder was not a butyl rubber although the primer layer containing the compound 1 was used.

### Reference Signs List

10 Tire vulcanization mold (mold)
20 Tire vulcanization bladder (bladder)
21 Membrane part
21a Bladder body
21b Primer layer
21c Coating layer
22 Clamp part
30 Center mechanism
40 Medium supply means
T Pneumatic tire

## Claims

1. A tire vulcanization bladder comprising:
a primer layer on an outer surface of a bladder body; and
a coating layer on an outer side of the primer layer,
the bladder body being formed from a rubber composition containing 50 mass% or more of a butyl rubber in a rubber component,
the coating layer being formed from a release agent containing a silicone component, and
the primer layer being formed from a silane compound having an alkoxy group and an amino group.

2. The tire vulcanization bladder according to claim 1, wherein the silane compound is a polysiloxane represented by General Formula (1) below: 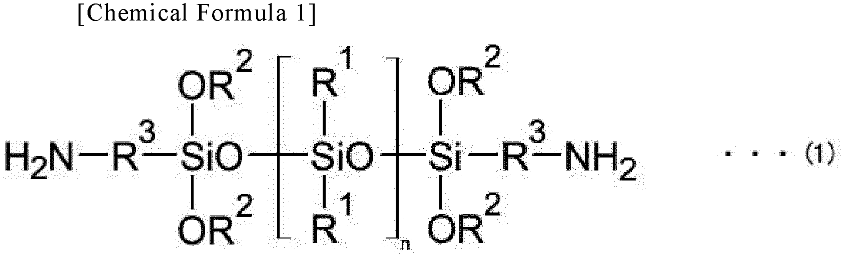 where n represents an integer from 0 to 1000, R¹ represents an alkyl group having from 1 to 20 carbons or an aryl group, OR² represents an alkoxy group having from 1 to 20 carbons, and R³ represents an alkylene group having from 1 to 20 carbons).

3. The tire vulcanization bladder according to claim 1 or 2, wherein the silicone component is a crosslinkable organopolysiloxane.

4. A method of producing a tire vulcanization bladder,
the tire vulcanization bladder being formed from an expandable rubber, being arranged in an inner side of an unvulcanized tire inserted in a tire vulcanization mold, and pressing toward an inner wall of the tire vulcanization mold from the inner side of the unvulcanized tire,
the tire vulcanization bladder comprising a membrane part in a cylindrical form in contact with an inner surface of the unvulcanized tire during vulcanization, the membrane part being a multilayer structure of a bladder body, a primer layer, and a coating layer,
the method comprising: vulcanization-molding a bladder body formed from a rubber composition containing 50 mass% or more of a butyl rubber in a rubber component;
arranging a primer layer formed from a silane compound having an alkoxy group and an amino group on an outer surface of the bladder body that is obtained; and
arranging and curing a coating layer formed from a release agent containing a silicone component on an outer side of this primer layer.

## Patentansprüche

1. Reifenvulkanisierungsbalg, umfassend:
eine Grundierungsschicht auf einer Außenoberfläche eines Balgkörpers; und
eine Beschichtungsschicht auf einer Außenseite der Grundierungsschicht,
wobei der Balgkörper aus einer Gummizusammensetzung gebildet ist, die zu 50 Masse-% oder mehr ein Butyl-Gummi in einem Gummibestandteil enthält,
wobei die Beschichtungsschicht aus einem Trennmittel gebildet ist, das einen Silikonbestandteil enthält, und
wobei die Grundierungsschicht aus einer Silanverbindung, die eine Alkoxygruppe und eine Aminogruppe aufweist, gebildet ist.

2. Reifenvulkanisierungsbalg gemäß Anspruch 1, wobei die Silanverbindung ein Polysiloxan ist, das durch die nachstehende allgemeine Formel (1) dargestellt wird: 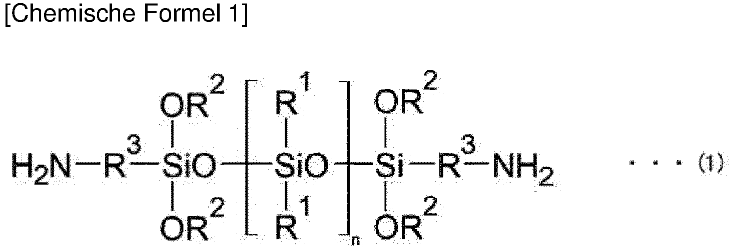 wobei n eine ganze Zahl von 0 bis 1000 darstellt, R¹ eine Alkylgruppe, die von 1 bis 20 Kohlenstoffatome aufweist, oder eine Arylgruppe darstellt, OR² eine Alkoxygruppe, die von 1 bis 20 Kohlenstoffatome aufweist, darstellt und R³ eine Alkylengruppe, die von 1 bis 20 Kohlenstoffatome aufweist, darstellt).

3. Reifenvulkanisierungsbalg nach Anspruch 1 oder 2, wobei der Silikonbestandteil ein vernetzbares Organopolysiloxan ist.

4. Verfahren zum Herstellen eines Reifenvulkanisierungsbalges,
wobei der Reifenvulkanisierungsbalg aus einem dehnbaren Gummi gebildet ist, an einer Innenseite eines unvulkanisierten Reifens angeordnet ist, der in eine Reifenvulkanisierform eingesetzt ist, und von der Innenseite des unvulkanisierten Reifens gegen eine Innenwand der Reifenvulkanisierform drückt,
der Reifenvulkanisierungsbalg umfassend einen Membranteil in einer zylindrischen Form, der während der Vulkanisierung mit einer Innenoberfläche des unvulkanisierten Reifens in Kontakt steht, wobei der Membranteil eine mehrschichtige Struktur aus einem Balgkörper, einer Grundierungsschicht und einer Beschichtungsschicht ist,
das Verfahren umfassend: Vulkanisierformen eines Balgkörpers, der aus einer Gummizusammensetzung gebildet ist, die zu 50 Masse-% oder mehr ein Butyl-Gummi in einem Gummibestandteil enthält;
Anordnen einer Grundierungsschicht, die aus einer Silanverbindung gebildet ist, die eine Alkoxygruppe und eine Aminogruppe auf einer Außenoberfläche des Balgkörpers aufweist, der erhalten wird; und
Anordnen und Aushärten einer Beschichtungsschicht, die aus einem Trennmittel gebildet ist, das einen Silikonbestandteil auf einer Außenseite dieser Grundierungsschicht enthält.

## Revendications

1. Vessie de vulcanisation de pneumatique, comprenant :
une couche d'apprêt sur une surface externe d'un corps de vessie ; et
une couche de revêtement sur une face externe de la couche d'apprêt,
le corps de vessie étant formé d'une composition de caoutchouc contenant 50 % en masse ou plus de caoutchouc butyle dans un composant de caoutchouc,
la couche de revêtement étant formée d'un agent de démoulage contenant un composant de silicone, et
la couche d'apprêt étant formée d'un composé de silane ayant un groupe alcoxy et un groupe amino.

2. Vessie de vulcanisation de pneumatique selon la revendication 1, dans laquelle le composé de silane est un polysiloxane représenté par la formule générale (1) ci-dessous : 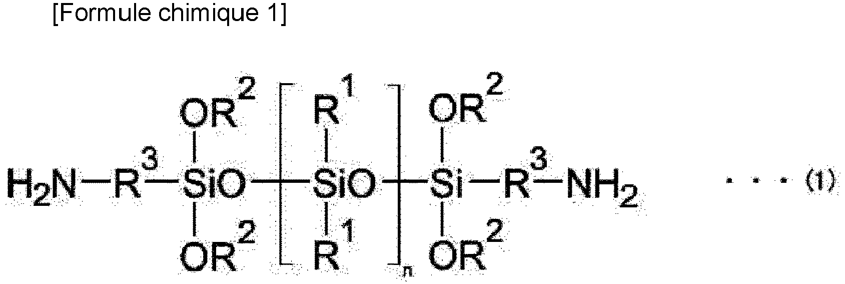 où n représente un nombre entier de 0 à 1000, R¹ représente un groupe alkyle ayant de 1 à 20 carbones ou un groupe aryle, OR² représente un groupe alcoxy ayant de 1 à 20 carbones, et R³ représente un groupe alkylène ayant de 1 à 20 carbones).

3. Vessie de vulcanisation de pneumatique selon la revendication 1 ou 2, dans laquelle le composant de silicone est un organopolysiloxane réticulable.

4. Procédé de production d'une vessie de vulcanisation de pneumatique,
la vessie de vulcanisation de pneumatique étant formée à partir d'un caoutchouc expansible et agencée sur une face interne d'un pneumatique non vulcanisé inséré dans un moule de vulcanisation de pneumatique, et exerce une pression sur la paroi interne du moule de vulcanisation de pneumatique depuis la face interne du pneumatique non vulcanisé,
la vessie de vulcanisation de pneumatique comprenant une partie membrane de forme cylindrique en contact avec une surface interne du pneumatique non vulcanisé pendant la vulcanisation, la partie membrane étant une structure multicouche composée d'un corps de vessie, d'une couche d'apprêt et d'une couche de revêtement,
le procédé comprenant : le moulage par vulcanisation d'un corps de vessie formé à partir d'une composition de caoutchouc contenant 50 % en masse ou plus de caoutchouc butyle dans un composant de caoutchouc ;
l'agencement d'une couche d'apprêt formée d'un composé de silane ayant un groupe alcoxy et un groupe amino sur une surface externe du corps de la vessie obtenu ; et
l'agencement et le durcissement d'une couche de revêtement formée d'un agent de démoulage contenant un composant de silicone sur une face externe de cette couche d'apprêt.
